# EUROPÄISCHE PATENTSCHRIFT

(11) **EP 1 015 821 B1**
(45) Veröffentlichungstag und Bekanntmachung des Hinweises auf die Patenterteilung: **17.07.2002**
(21) Anmeldenummer: 98951244.7
(22) Anmeldetag: 01.09.1998
(51) Int. Cl.: F24F 3/16

(54) **LUFTREINIGUNGSEINRICHTUNG**
AIR CLEANING DEVICE
DISPOSITIF DE PURIFICATION D'AIR

(30) Priorität: 20.09.1997 DE 19741621
(43) Veröffentlichungstag der Anmeldung: 05.07.2000
(73) Patentinhaber: Hertfelder, Rolf, 71134 Aidlingen (DE)
(72) Erfinder: HERTFELDER, Wilhelm, D-71144 Steinenbronn (DE); HERTFELDER, Rolf, D-71134 Aidlingen (DE)
(74) Vertreter: Späth, Dieter, Dipl.-Ing.
(86) Internationale Anmeldenummer: DE9802562
(87) Internationale Veröffentlichungsnummer: WO9915837

(56) Entgegenhaltungen:
- US-A- 4 248 162
- US-A- 4 792 345
- US-A- 5 230 720
- PATENT ABSTRACTS OF JAPAN vol. 095, no. 010, 30. November 1995 & JP 07 184723 A (ITOKI CREBIO CORP), 25. Juli 1995

## Beschreibung

Die Erfindung betrifft eine Luftreinigungseinrichtung mit den Merkmalen des Oberbegriffs des Anspruchs 1.

Aus der WO 96/27309 ist eine an einer Wand oder einer Decke eines Raumes zu befestigende Tischeinheit mit einer anheb- und absenkbaren Tischplatte bekannt. Eine hohle Tischhalterung weist eine Luftabsaugöffnung auf, durch die Raumluft abgesaugt und beispielsweise ins Freie geleitet werden kann. Die bekannte Tischeinheit bildet einen Teil eines Abluftsystems, sie erfordert zum Betrieb einen Anschluß an eine zentrale Abluftanlage eines Gebäudes und ist selbständig nicht betriebsfähig.

Die EP-A 0 644 379 A1 offenbart in einem Ausführungsbeispiel eine Luftreinigungseinrichtung, die als an der Wand anzubringender Schrank ausgebildet ist. Diese Luftreinigungseinrichtung kann nicht auf den Boden gestellt werden, da dadurch eine untere Einsaugöffnung verschlossen würde, sie ist deswegen nicht als Tisch ausbildbar und kann nicht an beliebiger Stelle eines Raums auf den Boden gestellt werden. Weiterer Nachteil dieser Luftreinigungseinrichtung ist, dass sie beispielsweise Tabakrauch nicht gezielt und unmittelbar nach seiner Entstehung ansaugt und reinigt. Vielmehr verteilt sich der Tabakrauch zunächst im Raum und es muss die gesamte Raumluft umgewältzt werden, um sie allmählich vom Tabakrauch zu reinigen, was uneffektiv ist.

Aus der US-A 5 230 720 ist ein kastenförmiger Tisch mit einem eingebauten Luftfilter vorbekannt. Auf dem Tisch ist eine Stehlampe fest angebracht, deren Lampenfuß als vertikal stehendes Rohr ausgebildet ist, durch das Luft zur Reinigung angesaugt wird. Das obere Ende des den Lampenfuß bildenden Rohrs ist von einem Lampenschirm umgeben und es ist eine Leuchte im Lampenschirm angeordnet. Diese Luftreinigungseinrichtung hat den Nachteil, dass ihre Luftansaugöffnung nicht horizontal ausgerichtet und somit ungünstig zum Ansaugen von beispielsweise Tabakrauch ist. Zudem schirmt der Lampenschirm die Luftansaugöffnung ab, was eine Ansaugeffektivität zusätzlich herabsetzt und eine Filterwirkung verschlechtert.

Der Erfindung liegt die Aufgabe zugrunde, eine Luftreinigungseinrichtung der eingangs genannten Art so auszubilden, dass sie selbstständig betriebsfähig ist und eine hohe Effektivität bei der Reinigung von Luft insbesondere von Tabakrauch aufweist.

Diese Aufgabe wird erfindungsgemäß durch die Merkmale des Anspruchs 1 gelöst. Erfindungsgemäß ist die Luftreinigungseinrichtung in ein tischähnliches Möbel, insbesondere einen Tisch, integriert, das eine Platte als Abstellfläche an seiner Oberseite aufweist, die nachfolgend als Tischplatte bezeichnet wird. Sie weist eine in den Tisch oder das tischähnliche Möbel integrierte Luftreinigungsvorrichtung mit einem Einsaugelement mit mechanischem Vorfilter, einem elektrostatischen Abscheidaggregat, einem Gebläse und einem vor dem Luftauslaß angeordneten adsorptiv oder katalytisch wirkenden Filter (Aktivkohlefilter) auf. Die erfindungsgemäße Luftreinigungseinrichtung ist also als Umluftsystem ausgelegt, das angesaugte Raumluft nach erfolgter Reinigung wieder dem Raum zuführt, in dem sie angesaugt worden ist. Die Erfindung hat den Vorteil, daß alle Komponenten der Luftreinigungseinrichtung in dem Tisch oder tischähnlichen Möbel untergebracht sind, zum Betrieb ist lediglich ein Elektroanschluß erforderlich. Dadurch ergeben sich vielfältige Verwendungsmöglichkeiten, die Luftreinigungseinrichtung läßt sich problemlos an wechselnden Orten verwenden. Besondere Vorkehrungen oder Installationen sind nicht notwendig.

Bei einer Ausgestaltung der Erfindung befindet sich eine Luftansaugöffnung der Luftreinigungseinrichtung über der Tischplatte und ist so ausgerichtet, daß sie einen Ansaugluftstrom mit großer Horizontalkomponente verursacht. Die erfindungsgemäße Luftreinigungseinrichtung erzeugt im Betrieb einen über die Tischplatte streichenden Ansaugluftstrom. Der Rauch wird unmittelbar dort erfaßt, wo er in einer überwiegenden Anzahl von Fällen erzeugt wird, nämlich von an Tischen oder tischähnlichen Möbeln sitzenden oder stehenden, rauchenden Personen unmittelbar am Möbel oder von brennenden Zigaretten, die in einem Aschenbecher abgelegt sind, der auf der Tischplatte abgestellt ist. Die erfindungsgemäße Luftreinigungseinrichtung wirkt daher als sog. Quellenfilter, das Tabakrauch bereits innerhalb kürzester Zeit von ca. 1 bis 3 Sekunden nach seiner Entstehung erfaßt und anschließend aus der Raumluft herausfiltert. Dies hat den Vorteil, daß eine Ausbreitung des Tabakrauchs in der Raumluft vermieden wird. Hinzu kommt, daß die erfaßte Luft eine hohe Tabakrauchkonzentration aufweist. Dies hat den Vorteil einer verbesserten Filterwirkung. Die hohe Tabakrauchkonzentration erfordert nur eine kleine Luftdurchsatzrate und ermöglicht damit eine kleine Bauform der erfindungsgemäßen Luftreinigungseinrichtung im Vergleich zu bekannten, kontinuierlich umwälzenden Luftreinigungseinrichtungen. Es läßt sich mit einer kleinen, kompakt bauenden, wenig Bauraum beanspruchenden Luftreinigungseinrichtung, die sich problemlos in einem Möbel unterbringen läßt und die eine geringe Stromaufnahme hat, eine gute Luftreinigung erreichen. Die erfindungsgemäße Luftreinigungseinrichtung ist preisgünstig herstellbar und hat niedrige Betriebskosten. Außer Tischen kommen für die erfindungsgemäße Luftreinigungseinrichtung tischähnliche Möbel wie Tresen oder Büromöbel in Betracht, die eine Platte als Abstellfläche auf ihrer Oberseite aufweisen und an denen gelegentlich oder öfters geraucht wird. Die Platte auf der Oberseite des Möbels wird für die Zwecke der Erfindungserläuterung als Tischplatte bezeichnet, der Begriff Tisch wird als den tischähnlichen Möbeln unterfallend angesehen.

Die oberhalb der Tischplatte angeordnete Luftansaugöffnung ist so ausgerichtet, daß ein durch die Luftansaugöffnung angesaugter Ansaugluftstrom eine horizontale, also parallel zur Tischplatte gerichtete Strömungskomponente mit einem Volumenstromanteil von mindestens 50 % des gesamten Ansaugluftstroms aufweist. Auf diese Weise wird erreicht, daß im wesentlichen der gesamte, in der nähe des tischähnlichen Möbels erzeugte Tabakrauch angesaugt und gefiltert wird. Die Luftansaugöffnung ist aus diesem Grund in einem Winkel von 45° oder größer, vorzugsweise unter einem Winkel zwischen etwa 60 und 90° zur Tischplatte angeordnet. Eine gedachte Lotlinie der Luftansaugöffnung, die zugleich eine mittlere Strömungsrichtung der Ansaugluft angibt, verläuft in einem spitzen Winkel oder parallel zur Tischplatte.

Die Gesamthöhe, mit der die Luftansaugöffnung der Luftreinigungseinrichtung die Tischplatte nach oben überragt, ist zumindest ebenso hoch wie die Hälfte einer mittleren Querabmessung einer größten, von angesaugter Luft (vertikal) durchströmten Luftdurchtrittsfläche im Innenbereich der Luftansaugöffnung. Dieser Bezug der Mindest-Gesamthöhe der Luftansaugöffnung über der Tischplatte mit der mittleren Querabmessung ihrer größten im Innenbereich auftretenden Luftdurchtrittsfläche bewirkt ein optimiertes Höhenprofil der sich außerhalb der Luftansaugöffnung ausbildenden horizontalen Luftströmung und garantiert somit eine gute Ansaugeffizienz der Rauchaerosole bei unterschiedlichen Gestaltungsformen der Luftansaugöffnung. Bei größer werdender Luftdurchtrittsfläche im Innenbereich der Luftansaugöffnung, die bei Ausgestaltungen der Erfindung von angesaugter Luft vertikal durchströmt wird, verringert sich die sich außerhalb der Luftansaugöffnung ausbildende horizontale Strömungskomponente der angesaugten Luft entsprechend. Die daraus resultierende nachteilige Auswirkung auf die Ansaugeffizienz von Rauchaerosolen wird erfindungsgemäß dadurch kompensiert, daß durch den angegebenen Bezug die Gesamthöhe, um die die Luftansaugöffnung die Tischplatte überragt, ebenfalls entsprechend erhöht wird. Hierdurch wird die horizontale Strömungskomponente der angesaugten Luft außerhalb der Luftansaugöffnung in ihrem Höhenprofil über der Tischplatte nach oben ausgeweitet, da die Luftansaugöffnung die Tischplatte entsprechend höher überragt.

In bevorzugter Ausgestaltung ist die Luftansaugöffnung umlaufend ausgebildet, wobei sie von Stegen oder dgl. unterbrochen sein kann. Auch ist es möglich, mehrere Luftansaugöffnungen vorzusehen, die in unterschiedliche Richtungen weisen, um Tabakrauch aus verschiedenen Richtungen um das tischähnliche Möbel herum anzusaugen.

Bei Ausgestaltungen der Erfindung ist die Luftansaugöffnung zylinder-, pyramiden- oder kegelmantelförmig, wobei die Luftansaugöffnung in Längsrichtung des Zylinders, der Pyramide oder des Kegels von einer geometrischen Zylinder- oder Kegelform abweichend gewölbt sein kann. Auch eine kalottenförmige Luftansaugöffnung ist möglich. Allen diesen Luftansaugöffnungen ist gemeinsam, daß ein durch die Luftansaugöffnung angesaugter Ansaugluftstrom eine große Strömungskomponente parallel oder in spitzem Winkel zur Tischplatte aufweist.

Die Höhe, um die die Luftreinigungseinrichtung mit der Luftansaugöffnung die Tischplatte überragt, ist auf etwa Brust- oder maximal Kinnhöhe normalgroßer, am tischähnlichen Möbel sitzender oder stehender Personen begrenzt. Die Luftreinigungseinrichtung ist dadurch nicht störend im Weg. Am tischähnlichen Möbel sitzende oder stehende Personen können sich ungehindert über die Luftreinigungseinrichtung hinweg sehen, sie werden nicht von der Luftreinigungseinrichtung verdeckt. Die Höhe, um die die Luftreinigungseinrichtung die Tischplatte überragt beträgt höchstens ungefähr 35 bis 45 cm.

Bei Ausgestaltungen der Erfindung ist ein Schutz der Luftreinigungseinrichtung vor einem bewußten oder unbeabsichtigten Einbringen von Fremdkörpern durch die über der Tischplatte befindliche Luftansaugöffnung vorgesehen. Es ist hier insbesondere an Zigarettenstummel, Asche oder verschüttete Getränke zu denken. Als Schutz ist eine über der Luftansaugöffnung angeordnete Abdeckung vorgesehen, die ein Eingießen von Flüssigkeit oder ein Einwerfen von festen Gegenständen von oben verhindert.

Des weiteren ist ein mechanisches Filter, insbesondere in Form eines Filtersiebs vorgesehen, das die Luftansaugöffnung abdeckt. Das Filtersieb kann ein Gitter-, Maschen- oder Wabenelement oder beispielsweise Streckmetall oder Metallgestrick aufweisen. Das Filter ist so ausgebildet, daß feste Partikel mit einer kleinsten Größenabmessung von kleiner 5 mm nicht in die Luftreinigungseinrichtung eingebracht werden können. Aufgrund seiner Ausbildung und seines steilen Neigungswinkels zur Horizontalen verhindert das Filter auch ein seitliches Eingießen von Flüssigkeit, zumindest ein Großteil der Flüssigkeit wird auf die Tischplatte abgeleitet und führt zu einer erhöhten Hemmschwelle für eine eventuelle Fortsetzung des Versuches, Getränkereste durch die Luftansaugöffnung zu schütten.

Zu Wartungs- und Reinigungszwecken ist die Abdeckung abnehmbar oder offenbar. Die freiwerdende Öffnung ist ausreichend groß, um ein Abscheideaggregat oder dgl. herausnehmen zu können. Die Abdeckung wird vorzugsweise mittels eines Schlosses oder eines Spezialsteckschlüssels ver- und entriegelt, um ein unbefugtes Öffnen zu verhindern.

Als weiterer Schutz gegen das Eindringen von Flüssigkeit in die Luftreinigungseinrichtung ist bei Ausgestaltungen der Erfindung ein von der Tischplatte nach oben stehender, durchgehend umlaufend ausgebildeter und flüssigkeitsdichter Rand unterhalb der Luftansaugöffnung vorgesehen. Dadurch wird auf die Tischplatte verschüttete Flüssigkeit von der Luftansaugöffnung abgehalten. Weiterer Vorteil eines solchen Randes ist, daß die Luftansaugöffnung mit Abstand oberhalb der Tischplatte beginnt, d. h. ein unterer Rand der Luftansaugöffnung befindet sich mit Abstand über der Höhe der Tischplatte. Diese Maßnahme vergrößert den Anteil der Horizontalkomponente der Luftansaugströmung und verbessert dadurch die Raucherfassung. Da unmittelbar über der Tischplatte allenfalls sehr kurzzeitig Rauch von beispielsweise in einem Aschenbecher abgelgten Zigaretten vorhanden ist, der dann in kürzester Zeit aufsteigt, verbessert die Anordnung der Lauftansaugöffnung mit Abstand oberhalb der Tischplatte die Raucherfassung. Der Rand hat vorzugsweise eine Höhe von ca. 15 % oder mehr der Höhe, um die die Luftansaugöffnung die Tischplatte überragt.

Da sich der Rand im Blickfeld am tischähnlichen Möbel sitzender oder stehender Personen befindet, ist er ein idealer Werbe- und Informationsträger.

Bei einer Fortbildung der Erfindung ist eine vorzugsweise blendfreie Beleuchtung vorgesehen, die den Bereich der Luftansaugöffnung beleuchtet. Die Beleuchtung strahlt insbesondere nicht seitlich über die Tischplatte hinaus. Durch die Beleuchtung werden Rauchpartikel im Nahbereich der Luftansaugöffnung aufgrund von Lichtbrechung sichtbar. Dies gibt einem Raucher einen Anreiz, den Rauch in Richtung der Luftansaugöffnung zu blasen und so einen Lichteffekt zu erzeugen. Dies erhöht die Erfassungseffizienz der erfindungsgemäßen Luftreinigungseinrichtung erheblich. Durch die Strahlrichtung der Beleuchtung, die seitlich nicht über die Tischplatte hinaus leuchtet, wird eine Blendung am tischähnlichen Möbel sitzender oder stehender Personen durch direkten Blickkontakt mit der Beleuchtung verrnieden. Die Beleuchtung kann nach oben gerichtet sein, wobei ein Lichtkegel so eng ist, daß er sich innerhalb der Tischplatte befindet und am Tisch sitzende oder stehende Personen üblicherweise nicht in den Lichtkegel gelangen, auch wenn sie sich auf der Tischplatte aufstützen und über diese beugen. Vorzugsweise stahlt die Beleuchtung von oben nach unten mit einem Lichtkegel, dessen Kegelwinkel das Licht zwar aus der beispielsweise kegelmantelflächenförmigen Luftansaugöffnung austreten, jedoch mit begrenztem Abstand von der Luftansaugöffnung und mit Abstand von einem Rand der Tischplatte auf der Tischplatte auftreffen läßt. Die Beleuchtung kann eine Glühbirne sowie einen die Glühbirne umgebenden Reflektor aufweisen, der das Licht zum gewünschten Lichtkegel reflektiert. Auch kann die Beleuchtung einen von der eigentlichen Lichtquelle separaten Reflektor aufweisen, der das Licht in die gewünschte Richtung reflektiert.

Bei einer Ausgestaltung der Erfindung ist die Luftreinigungseinrichtung platzsparend in einem rohrförmigen Tisch- oder Möbelbein untergebracht. Für eine solche Unterbringung besonders geeignet sind zylindrisch aufgebaute, elektrostatische Filtereinrichtungen vorzugsweise mit nachgeschaltetem adsorptiv oder katalytischem Filter. Ein derartiges, kompakt aufgebautes elektrostatisches Abscheideaggregat ist offenbart in der DE G 94 19 827. Für einen kompakten und raumsparenden Aufbau des elektrostatischen Abscheideaggregats weist dieses bei Ausgestaltungen der Erfindung einen einfach oder mehrfach geschachtelten Röhrenabscheider auf.

Bekannte, kontinuierlich arbeitende Luftreinigungseinrichtungen haben aufgrund des erforderlichen hohen Luftdurchsatzes funktionsbedingt den Nachteil eines schlechten Filtrierwirkungsgrades. Dies gilt insbesondere für die bei der Tabakrauchentsorgung relevanten Partikelgrößen von 0,1 bis 2,5 µm. Weiterer Nachteil kontinuierlich arbeitender elektrostatischer Abscheideaggregate ist deren Eigenschaft, Ozon und Stickoxide zu bilden, wenn sie mit sauberer oder wenig verunreinigter Luft beaufschlagt werden. Die Abscheideleistung bekannter, elektrostatischer Luftreinigungseinrichtungen muß daher begrenzt werden, um eine zu hohe Ozon- oder Stickoxidkonzentration in der Raumluft zu vermeiden. Die Erfindung sieht zur Vermeidung dieser Nachteile eine Bedarfssteuerung vor: Die Luftreinigungseinrichtung kann beispielsweise auf Tastendruck in Betrieb gesetzt werden und wird von einer Zeitschaltung nach einer einstellbaren Zeit abgestellt, die beispielsweise der Dauer des Rauchens einer Zigarette zuzüglich einer Nachlaufzeit entspricht. Bei einer Weiterbildung ist vorgesehen, die Bedarfssteuerung mit einer Sensorik auszustatten, die auf Rauch, brennende Zigaretten, Personen in unmittelbarer Umgebung des tischähnlichen Möbels oder Gas anspricht und die Luftreinigungseinrichtung in Betrieb setzt. Eine solche Sensorik kann einen Rauchsensor, einen Infrarotsensor, der den Glimmpunkt einer brennenden Zigarette oder Menschen sensiert, oder einen Gassensor aufweisen. Die Abschaltung kann zeitgesteuert und/oder ebenfalls mittels des Rauchsensors erfolgen, wenn dieser keinen Rauch mehr detektiert. Die Bedarfssteuerung ist möglich, da die erfindungsgemäße Luftreinigungseinrichtung als sog. Quellenfilter ausgebildet ist, das nahe an der Rauchquelle angeordnet ist. Die Ausbildung als Quellenfilter bedingt, daß die Luftreinigungseinrichtung einer hohen Rauchkonzentration ausgesetzt ist. Dadurch läßt sich eine Luftreinigungseinrichtung mit hoher Reinigungsleistung, d. h. mit hoher lonisationsleistung des elektrostatischen Abscheideaggregats vorsehen, ohne daß eine nennenswerte Ozon- oder Stickoxidemission erfolgt. Die hohe Abscheideleistung verbessert zudem den Wirkungsgrad der Luftreinigungseinrichtung. Es wird eine Abscheidewirkung des elektrostatischen Abscheideaggregats von annähernd 100 % erreicht.

Vorzugsweise ist die Filtrierleistung durch Steuerung eines lonisationsstroms und/oder einer Gebläseleistung, die Luft durch die Luftansaugöffnung an- und durch das elektrostatische Abscheideaggregat hindurchsaugt, einstellbar. Die Einstellung kann manuell erfolgen. Vorzugsweise erfolgt sie mittels des Rauchsensors abhängig von der Verunreinigung der angesaugten Luft. Auch kann die Filtrierleistung nach einer vorgegebenen Zeit mittels der Zeitsteuerung herabgesetzt werden, nach der sich erfahrungsgemäß die Rauchkonzentration nach dem Ausrauchen einer Zigarette verringert. Auf diese Weise lassen sich die einander entgegengerichteten Forderungen einer Luftreinigung von Tabakrauch zu möglichst 100 % innerhalb kürzester Zeit nach Entstehung des Tabakrauchs und einer vernachlässigbaren Ozon- oder Stickstoffemission optimal erreichen.

Die Erfindung wird nachfolgend anhand in der Zeichnung dargestellter Ausführungsbeispiele näher erläutert. Es zeigen:
- Figur 1: eine Explosionsdarstellung einer erfindungsgemäßen Luftreinigungseinrichtung;
- Figur 2: die Luftreinigungseinrichtung aus Figur 1 im Achsschnitt;
- Figur 3: die Luftreinigungseinrichtung aus Figur 1 in zusammengebautem und geöffnetem Zustand in perspektivischer Darstellung;
- Figur 4: die Luftreinigungseinrichtung aus Figur 3 mit herausgehobenem elektrostatischem Abscheideaggragat;
- Figur 5: eine abgewandelte Ausgestaltung der in Figuren 1 bis 4 dargestellten Luftreinigungseinrichtung in einer Figur 2 entsprechenden Achsschnittdarstellung; und
- Figur 6: eine weitere abgewandelte Ausführungsform einer erfindungsgemäßen Luftreinigungseinrichtung in einer Figur 5 entsprechenden Achschnittdarstellung.

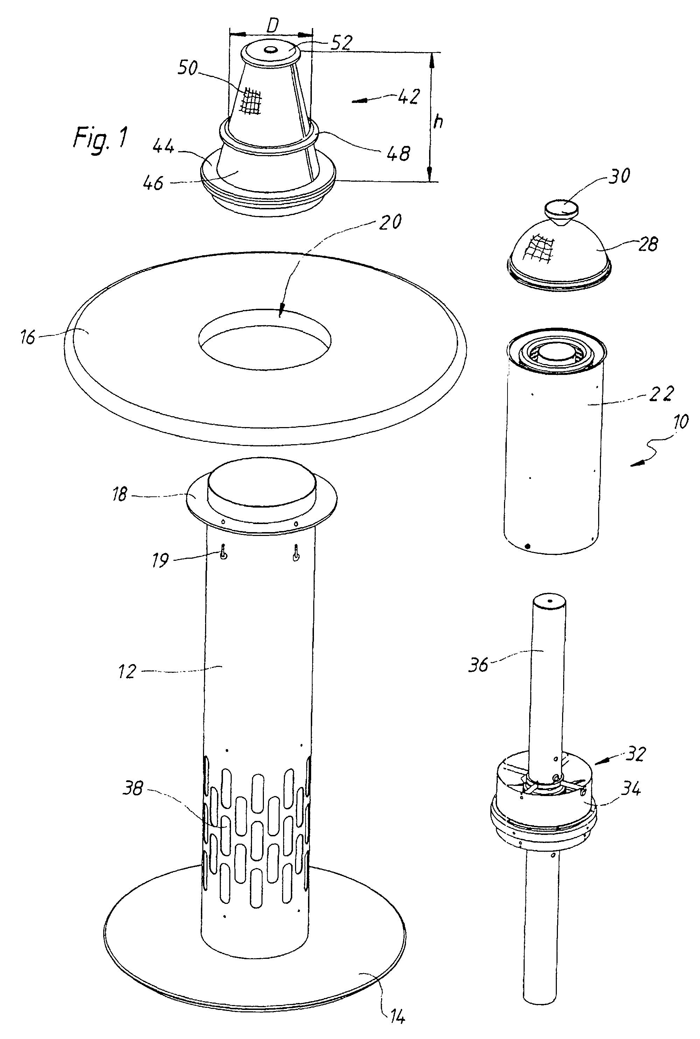

Die in Figur 1 in Explosionsdarstellung gezeigte Luftreinigungseinrichtung 10 ist erfindungsgemäß in ein zentrales Tischbein 12, das die Form eines Rohes aufweist, eingesetzt. Das Tischbein 12 weist einen kreisrunden, plattenförmigen Tischfuß 14 auf, mit dem es verschweißt ist. Das Tischbein 12 trägt eine ebenfalls kreisrunde Tischplatte 16, die auf einen Radialflansch 18 des Tischbeins 12 aufgesetzt und mit diesem mit Schrauben 19 unten verschraubt ist. Die Tischplatte 16 ist mit einer kreisrunden Mittelöffnung 20 versehen, deren Durchmesser einem Durchmesser des Tischbeines 12 entspricht.

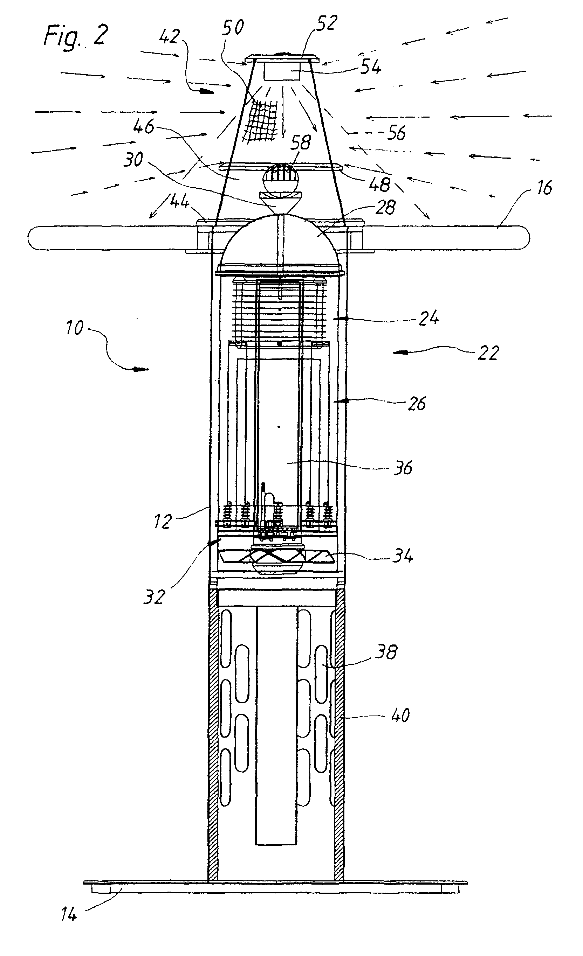

Die Luftreinigungseinrichtung weist ein zylinderförmiges, elektrostatisches Abscheideaggregat 22 mit einem Gasionisator 24 und einem sich in Strömungsrichtung der zu reinigenden Luft anschließenden, mehrfach geschachtelten, elektrostatischen Röhrenabscheider auf (Figur 2). Ein derartiges elektrostatisches Abscheideaggregat 22 ist beispielsweise in der DE-G 94 19 827 beschrieben. Auf die Stirnseite, an welcher sich der Gasionisator 24 befindet und die bei in das Tischbein 12 eingesetztem elektrostatischem Abscheideaggregat 22 und stehendem Tisch oben ist, ist ein halbkugelförmiges, mechanisches Filter 28 auf das elektrostatische Abscheideaggregat 22 aufgesetzt und beispielsweise mittels eines in der Zeichnung nicht sichtbaren Bajonettverschlußes oder einer Verschraubung mit dem elektrostatischen Abscheideaggregat 22 verbunden. Oben in seiner Mitte weist das Filter 28 einen knopfartigen Griff 30 auf.

Das elektrostatische Abscheideaggregat 22 ist auf eine Gebläse- und Steuereinheit 32 aufgesetzt, die ein Axialgebläse 34 aufweist, von dem sich ein Rohr 36 axial in beide Richtungen erstreckt, in welchem die Steuerung sowie die Elektrik des elektrostatischen Abscheideaggregats 22 untergebracht ist. Das Rohr 36 durchsetzt das elektrostatische Abscheideaggregat 22. An einem oberen Stirnende des Rohres 36 kann ein in der Zeichnung nicht sichtbarer Rauchsensor angeordnet. Gelangt mit Rauch verunreinigte Luft an den Rauchsensor, wird das elektrostatische Abscheideaggregat 22 und das Gebläse 34 für eine vorgegebene Zeitspanne automatisch in Betrieb genommen. Anschließend werden Gebläse 34 und Abscheideaggregat wieder ganz oder teilweise abgeschaltet. Die Gebläse- und Steuereinheit 32 ist mit nicht dargestellten Schrauben, die radial durch das das Tischbein 12 bildende Rohr hindurchgehen, mit dem Tischbein 12 verschraubt. Das elektrostatische Abscheideaggregat 22 ist lediglich auf die Gebläse- und Steuereinheit 32 aufgesetzt.

Ein Luftauslaß 38 der erfindungsgemäßen Luftreinigungseinrichtung wird durch eine Anzahl schlitzförmiger Löcher gebildet, die unterhalb des Gebläses 34 in dem das Tischbein 12 bildenden Rohr angebracht sind. Im Bereich des Luftauslasses 38 ist das das Tischbein 12 bildende Rohr an seiner Innenseite mit einem hohlzylindrischen Aktivkohlefilter 40 ausgekleidet. Das Aktivkohlefilter 40 ist in Strömungsrichtung hinter dem elektrostatischen Abscheideaggregat 22 angeordnet. Es reinigt vom Gebläse 34 angesaugte Luft von gasförmigen Bestandteilen von beispielsweise Tabakrauch, nachdem Feinstaerosole im elektrostatischen Abscheideaggregat 22 abgeschieden worden sind.

Auf die Mittelöffnung 20 und damit auf die offene Oberseite des Tischbeines 12, durch welche vom Gebläse 34 angesaugte Luft in das elektrostatische Abscheideaggregat 22 gelangt, ist ein Einsaugelement 42 aufgesetzt, das die Form eines hohlen Kegelstumpfes aufweist. Das Einsaugelement 42 weist einen Adapterring 44 an seiner Unterseite auf, der flüssigkeitsdicht in die Mittelöffnung 20 der Tischplatte 16 eingesetzt ist. Vom Adapterring 44 erstreckt sich ein ringförmiger, konischer und flüssigkeitsdichter Rand 46 nach oben. Dieser Rand 46 verhindert, daß auf die Tischplatte 16 verschüttete Flüssigkeit durch das Mittelloch 20 in die Luftreinigungseinrichtung gelangt. Der Rand 46 dient zugleich als Werbeträger, auf den Werbung aufgeklebt oder beispielsweise in Form eines bedruckten, konischen Papierrings (nicht dargestellt) aufsteckbar ist, der von einem abnehmbaren Fixierring 48 gehalten wird. Im dargestellten Ausführungsbeispiel hat der Rand 46 eine Höhe von ca. 6 cm, was in etwa 15 % der Gesamthöhe des Einsaugelements 42 entspricht.

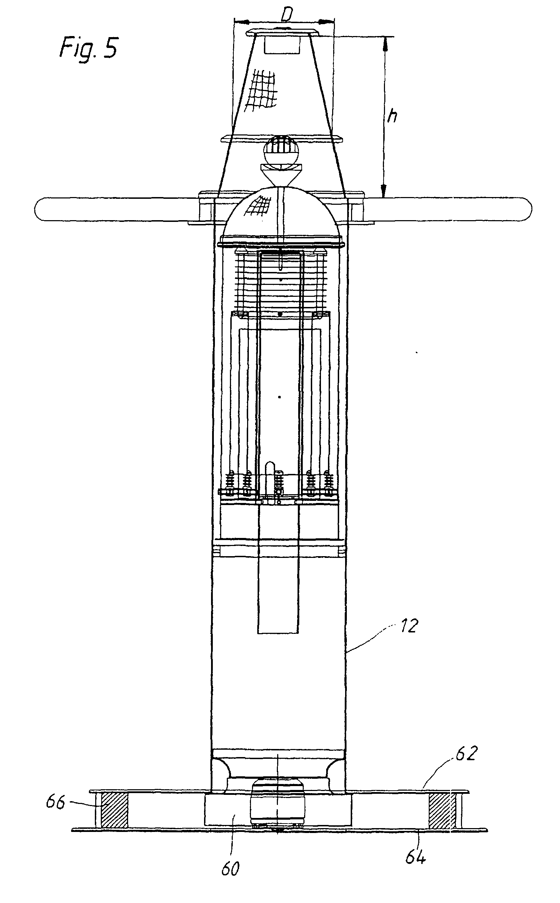

In Fortsetzung des Randes 46 weist das Einsaugelement 42 ein ebenfalls kegelstumpfförmiges mechanisches Filter 50 aus Streckmetall auf. Dieses Filter 50 deckt eine Luftansaugöffnung des Einsaugelements 42 der erfindungsgemäßen Luftreinigungseinrichtung ab. Die Luftreinigungseinrichtung hat also eine kegellstumpfförmige Luftansaugöffnung. Das Einsaugelement 42 weist eine größere Gesamthöhe h, um die sie die Tischplatte 16 überragt, auf, als die Hälfte eines Durchmessers D einer größten horizontalen Luftdurchtrittsfläche in Höhe der Luftansaugöffnung (vgl. auch Figur 5). An seiner Oberseite weist das Einsaugelement 42 eine kreisförmige Deckplatte 52 auf. Das Filter 50 und die Deckplatte 52 bilden eine Abdeckung der Luftansaugöffnung, die das Eindringen fester Gegenstände in die Luftreinigungseinrichtung verhindern. Ebenso wird aufgrund des steil stehenden Filters 50 eventuell auf dieses verschüttete Flüssigkeit abgewiesen und läuft außen am Einsaugelement 42 herunter auf die Tischplatte 16.

Die Deckplatte 52 bewirkt einen vom Gebläse 34 verursachten Ansaugluftstrom mit einer großen Horizontalkomponente, die über 50 % des gesamten Ansaugluftstroms beträgt.

An der Unterseite der Deckplatte 52 ist eine Lichtquelle 54 mit einer in der Zeichnung nicht sichtbaren, in einem Reflektor untergebrachten Glühbirne angeordnet. Die Lichtquelle 54 hat einen nach unten auf die Tischplatte 16 gerichteten Lichtkegel 56, wie er in Figur 2 mit Strichlinien andeutungsweise dargestellt ist. Ein Kegelwinkel des Lichtkegels 56 ist größer als ein Kegelwinkel des Filters 50 des Einsaugelements 42, so daß das Licht der Lichtquelle 54 seitlich aus dem Filter 50 austritt. Der Lichtkegel 56 macht in ihn gelangenden Tabakrauch durch Lichtbrechung sichtbar und bildet dadurch einen Anreiz für einen Raucher, den Rauch in Richtung des Lichtkegels 56 und damit in Richtung der Luftansaugöffnung der erfindungsgemäßen Luftreinigungseinrichtung zu blasen. Der Kegelwinkel des Lichtkegels 56 ist so klein gewählt, daß er weit innerhalb eines Randes der Tischplatte 16 auf die Tischplatte 16 auftrifft. Dadurch wird eine Blendung vermieden. Auf der Deckplatte 52 können in der Zeichnung nicht dargestellte Bedienelemente wie beispielsweise ein Taster, mit dem sich die Luftreinigungseinrichtung in Betrieb setzen läßt, angebracht sein. Ebenso eignet sich die Deckplatte 52 zur Anbringung eines nicht dargestellten Rauch-, Infrarot- oder Gassensors, um die Luftreinigungseinrichtung selbsttätig in Betrieb zu setzen.

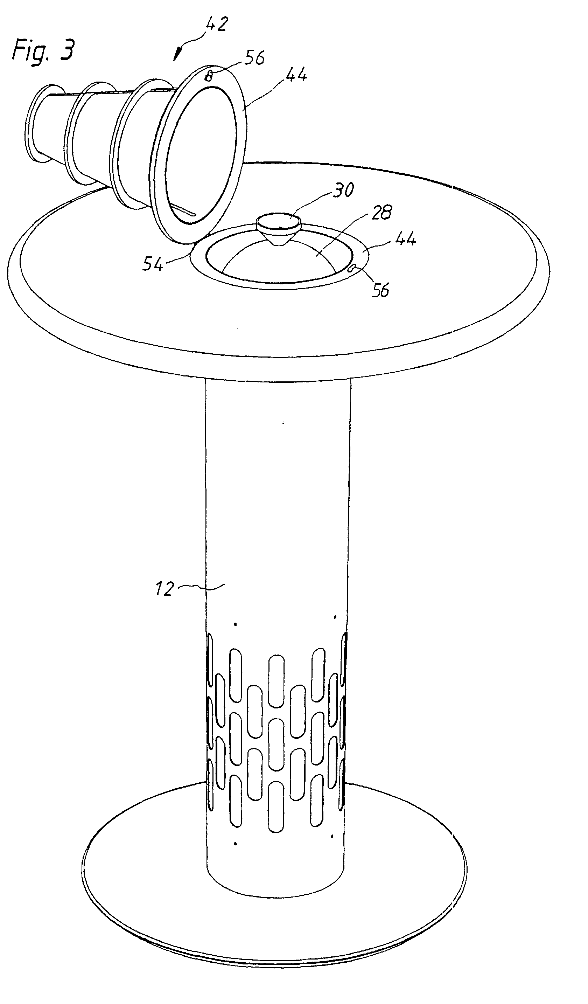

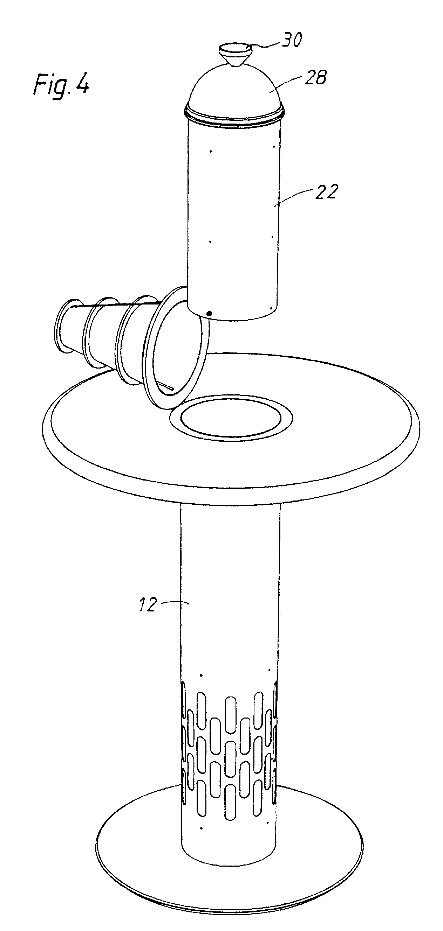

Wie in Figur 3 dargestellt, ist das Einsaugelement 42 zum Öffnen der erfindungsgemäßen Luftreinigungseinrichtung zur Seite klappbar. Zu diesem Zweck ist der Adapterring 44 zweiteilig ausgeführt, wobei die beiden Ringe 44 über ein Scharnier 54 miteinander verbunden und mittels eines an sich bekannten Schlosses 56 gegen unbefugtes Öffnen verriegelbar sind. Nach dem Öffnen läßt sich das elektrostatische Abscheideaggregat 22 am Griff 30 des Filters 28 ergreifen und aus dem Tischbein 12 nach oben herausziehen, wie in Figur 4 dargestellt. Auf diese Weise kann das elektrostatische Abscheideaggregat 22 auf einfache Weise gereinigt oder ausgetauscht werden.

Zur Deodorierung von mittels des Gebläses 34 angesaugter Luft kann die erfindungsgemäße Luftreinigungseinrichtung eine Anlage zur Abgabe von Duftstoffen aufweisen, wie sie an sich bekannt ist. Eine solche Anlage 58 zur Abgabe von Duftstoffen ist bei dem in Figur 2 dargestellten Ausführungsbeispiel der Erfindung auf dem Griff 30 angeordnet. Die Anlage 58 zur Abgabe von Duftstoffen wird ebenfalls von der Steuereinheit 32 gesteuert.

Die in Figur 5 dargestellte, erfindungsgemäße Luftreinigungseinrichtung weist ein Radialgebläse 60 anstelle des Axialgebläse 34 am unteren Ende des Tischbeins 12 auf. Der Tischfuß 14 ist als Hohlscheibe mit einer Deckplatte 62 und einer Bodenplatte 64 ausgebildet, in deren Zwischenraum das Radialgebläse 60 bläst. Ein ringförmiges Aktivkohlefilter 66 ist am Rand des Tischfußes zwischen die Deckscheibe 62 und die Bodenplatte 64 in Segmenten eingesetzt. Ein Luftauslaß erfolgt durch das Kohlefilter 66 am Umfang des Tischfußes 62, 64. Im übrigen ist die in Figur 5 dargestellte Ausführungsform der Erfindung gleich aufgebaut wie diejenige aus Figuren 1 bis 4. Zur Vermeidung von Wiederholungen wird auf die entsprechenden Ausführungen verwiesen.

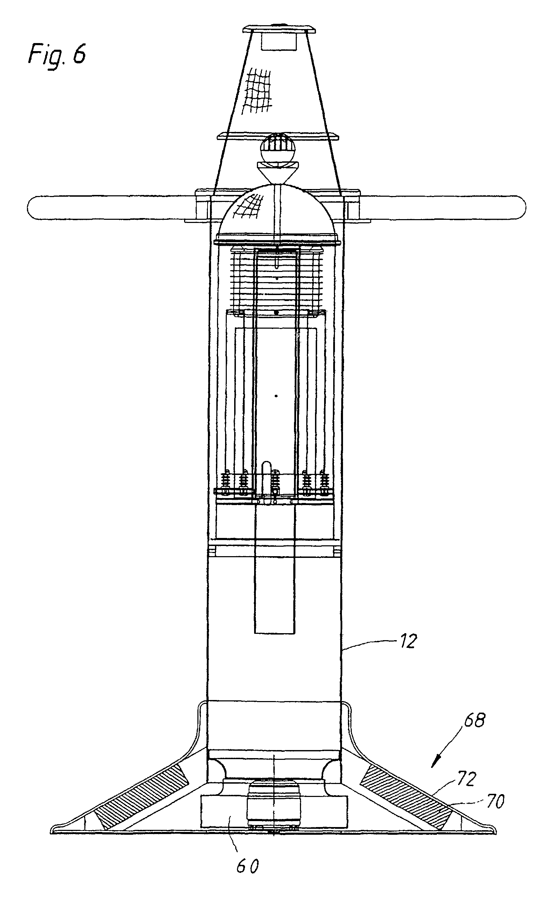

Die in Figur 6 dargestellte, erfindungsgemäße Luftreinigungseinrichtung weist ebenfalls einen hohlen Tischfuß 68 mit der Form eines flachen Kegels auf. Das Radialgebläse 60 ist im Tischfuß 68 untergebracht. Ein Kohlefilter 70 weist die Form eines in Segmente geteilten konischen Rings auf und ist innen an einer konischen Tischfußwand 72 angeordnet. Im übrigen stimmt auch diese Ausführungsform mit derjenigen aus Figuren 1 bis 4 überein. Es wird insoweit auf die entsprechenden Ausführungen zu Figuren 1 bis 4 verwiesen.

## Patentansprüche

1. Luftreinigungseinrichtung, bestehend aus
- einem Tisch oder einem tischähnlichen Möbel mit einer Tischplatte,
- einer im Tisch oder im tischähnlichen Möbel integrierten Luftreinigungsvorrichtung (10),
- wobei die Luftreinigungsvorrichtung (10) aus
- einem Einsaugelement (42) mit mechanischem Vorfilter (50, 28),
- einem elektrostatischen Abscheideaggregat (22),
- einem Gebläse (34, 60),
- einem vor dem Luftauslaß (38) angeordneten adsorptiv oder katalytisch wirkenden Filter, z.B. einem Aktivkohlefilter (40), besteht,
**dadurch gekennzeichnet, daß** das Einsaugelement (42) die Tischplatte (16) überragt und dessen Luftansaugöffnung für eine Ansaugluftströmung mit großer Horizontalkomponente ausgerichtet ist, daß die Luftansaugöffnung eine höchste Höhe (h) über der Tischplatte (16) aufweist, die mindestens der Hälfte einer mittleren Querabmessung (D) einer größten Luftdurchtrittsfläche der Luftreinigungseinrichtung (10) im Innenbereich der Luftansaugöffnung entspricht.

2. Luftreinigungseinrichtung nach Anspruch 1, **dadurch gekennzeichnet, daß** die Luftansaugöffnung für eine Ansaugluftströmung ausgerichtet ist, deren Horizontalkomponente außerhalb der Luftansaugöffnung mindestens 50 % des Ansaugluftsroms beträgt.

3. Luftreinigungseinrichtung nach Anspruch 1 oder 2, **dadurch gekennzeichnet, daß** die Luftansaugöffnung einen Winkel zwischen etwa 45° und 90° zur Tischplatte (16) aufweist.

4. Luftreinigungseinrichtung nach einem oder mehreren der Ansprüche 1 bis 3, **dadurch gekennzeichnet, daß** die Luftansaugöffnung kegelmantelflächenähnlich oder pyramidenflächenähnlich ist.

5. Luftreinigungseinrichtung nach einem oder mehreren der Ansprüche 1 bis 4, **dadurch gekennzeichnet, daß** die Luftreinigungsvorrichtung (10) die Tischplatte (16) um nicht mehr als etwa 35 bis 45 cm überragt.

6. Luftreinigungseinrichtung nach einem oder mehreren der Ansprüche 1 bis 5, **dadurch gekennzeichnet, daß** das tischähnliche Möbel eine Abdeckung (Filter 50, Deckplatte 52) für die Luftansaugöffnung aufweist, die ein Einschütten von Flüssigkeit und ein Einwerfen von Gegenständen in die Luftreinigungsvorrichtung (10) verhindert oder zumindest im wesentlichen verhindert.

7. Luftreinigungseinrichtung nach Anspruch 6, **dadurch gekennzeichnet, daß** die Abdeckung (Filter 50, Deckplatte 52) einen über der Luftansaugöffnung angeordneten Abweiser (52) aufweist.

8. Luftreinigungseinrichtung nach Anspruch 6, **dadurch gekennzeichnet, daß** die Abdeckung (Filter 50, Deckplatte 52) ein mechanisches Filter (50), insbesondere ein Filtersieb aufweist, das die Luftansaugöffnung abdeckt.

9. Luftreinigungseinrichtung nach Anspruch 6, **dadurch gekennzeichnet, daß** die Abdeckung (Filter 50, Deckplatte 52) abnehmbar oder öffenbar ist.

10. Luftreinigungseinrichtung nach einem oder mehreren der vorhergehenden Ansprüche, **dadurch gekennzeichnet, daß** das tischähnliche Möbel einen von der Tischplatte (16) nach oben stehenden, umlaufenden, luft- und flüssigkeitsundurchlässigen Rand (46) unterhalb der Luftansaugöffnung aufweist.

11. Luftreinigungseinrichtung nach Anspruch 10, **dadurch gekennzeichnet, daß** der Rand (46) als Schrift- und/oder Bildträger ausgebildet ist.

12. Luftreinigungseinrichtung nach einem oder mehreren der vorhergehenden Ansprüche, **dadurch gekennzeichnet, daß** das tischähnliche Möbel eine Beleuchtung (54) aufweist, die den Bereich der Luftansaugöffnung beleuchtet.

13. Luftreinigungseinrichtung nach Anspruch 12, **dadurch gekennzeichnet, daß** die Beleuchtung (54) blendfrei ist.

14. Luftreinigungseinrichtung nach einem oder mehreren der vorhergehenden Ansprüche, **dadurch gekennzeichnet, daß** das tischähnliche Möbel ein rohrförmiges Tischbein (12) aufweist, in dem die Luftreinigungsvorrichtung (10) untergebracht ist.

15. Luftreinigungseinrichtung nach einem oder mehreren der Ansprüche 1 bis 14, **dadurch gekennzeichnet, daß** das elektrostatische Abscheideaggregat (22) einen einfach oder mehrfach geschachtelten Röhrenabscheider (24) aufweist.

16. Luftreinigungseinrichtung nach einem oder mehreren der vorhergehenden Ansprüche, **dadurch gekennzeichnet, daß** die Luftreinigungsvorrichtung (10) eine Bedarfssteuerung (32) aufweist.

17. Luftreinigungseinrichtung nach einem oder mehreren der vorhergehenden Ansprüche, **dadurch gekennzeichnet, daß** die Luftreinigungsvorrichtung (10) einen Rauchsensor aufweist.

18. Luftreinigungseinrichtung nach einem oder mehreren der vorhergehenden Ansprüche, **dadurch gekennzeichnet, daß** die Luftreinigungseinrichtung (10) eine Anlage (58) zur Abgabe von Duftstoffen aufweist.

## Claims

1. An air purifying device, consisting of
- a table or table-like piece of furniture with a table top, and
- an air purifying unit (10) that is integrated into the table or table-like piece of furniture,
- wherein the air purifying unit (10) consists of
- a suction element (42) with a mechanical preliminary filter (50, 28)
- an electrostatic separating unit (22),
- a blower (34, 60), and
- an adsorptive or catalytic filter that is arranged in front of the air outlet (38), e.g., an activated carbon filter (40),
**characterized by** the fact that the suction element (42) protrudes over the table top (16), wherein the air intake opening of the suction element is designed for an intake air flow with a high horizontal component, and by the fact that the air intake opening has a maximum height (h) above the table top (16) which corresponds to at least half the average cross-sectional dimension (D) of the greatest air passage surface of the air purifying unit (10) in the inner region of the air intake opening.

2. The air purifying device according to Claim 1, **characterized by** the fact that the air intake opening is designed for an intake air flow, the horizontal component of which amounts to at least 50 % of the intake air flow outside the air intake opening.

3. The air purifying device according to Claim 1 or 2, **characterized by** the fact that the air intake opening is arranged at an angle between approximately 45° and 90° referred to the table top (16).

4. The air purifying device according to at least one of Claims 1 - 3, **characterized by** the fact that the air intake opening is realized similar to the surface area of a cone or a pyramid.

5. The air purifying device according to at least one of Claims 1 - 4, **characterized by** the fact that the air purifying unit (10) does not protrude over the table top (16) by more than approximately 35 - 45 cm.

6. The air purifying device according to at least one of Claims 1 - 5, **characterized by** the fact that the table-like piece of furniture contains a cover (filter 50, cover plate 52) for the air intake opening, wherein said cover prevents or at least essentially prevents the admission of liquids or objects into the air purifying unit (10).

7. The air purifying device according to Claim 6, **characterized by** the fact that the cover (filter 50, cover plate 52) contains a deflector (52) that is arranged above the air intake opening.

8. The air purifying device according to Claim 6, **characterized by** the fact that the cover (filter 50, cover plate 52) contains a mechanical filter (50), in particular a filter screen that covers the air intake opening.

9. The air purifying device according to Claim 6, **characterized by** the fact that the cover (filter 50, cover plate 52) can be removed or opened.

10. The air purifying device according to at least one of the preceding claims, **characterized by** the fact that the table-like piece of furniture contains a circumferential air-tight and fluid-tight border (46) underneath the air intake opening, wherein said border protrudes upward from the table top (16).

11. The air purifying device according to Claim 10, **characterized by** the fact that the border (46) contains lettering and/or images.

12. The air purifying device according to at least one of the preceding claims, **characterized by** the fact that the table-like piece of furniture contains lighting (54) that illuminates the region of the air intake opening.

13. The air purifying device according to Claim 12, **characterized by** the fact that the lighting (54) is realized in an anti-glare fashion.

14. The air purifying device according to at least one of the preceding claims, **characterized by** the fact that the table-like piece of furniture contains a tubular table leg (12), in which the air purifying unit (10) is accommodated.

15. The air purifying device according to at least one of Claims 1 - 14, **characterized by** the fact that the electrostatic separating unit (22) contains a singly or multiply nested tubular separator (24).

16. The air purifying device according to at least one of the preceding claims, **characterized by** the fact that the air purifying unit (10) contains an on-demand control (32).

17. The air purifying device according to at least one of the preceding claims, **characterized by** the fact that the air purifying unit (10) contains a smoker sensor.

18. The air purifying device according to at least one of the preceding claims, **characterized by** the fact that the air purifying unit (10) contains a system (58) for delivering aromatic substances.

## Revendications

1. Dispositif de purification d'air comprenant les éléments suivants
- une table ou un meuble ressemblant à une table avec un plateau,
- un dispositif de purification d'air (10) intégré dans la table ou dans le meuble ressemblant à la table,
- le dispositif de purification d'air (10) comprenant les éléments suivants
- un élément d'aspiration (42) avec un pré-filtre (50, 28) mécanique,
- un ensemble de séparation (22) électrostatique,
- une soufflerie (34,60),
- un filtre à effet d'adsorption ou de catalyse est disposé en amont de la sortie d'air (38), par exemple un filtre à charbon actif (40),
**caractérisé en ce que** l'élément d'aspiration (42) déborde du plateau (16) et dont l'orifice d'admission d'air est aménagé pour un écoulement d'air d'admission avec une grande composante horizontale, **en ce que** l'orifice d'admission d'air présente une hauteur maximale (h) au-dessus du plateau (16), qui correspond au moins à la moitié d'une dimension transversale (D) moyenne d'une surface de passage d'air maximale du dispositif de purification d'air (10) dans la zone intérieure de l'ouverture d'admission d'air.

2. Dispositif de purification d'air selon la revendication 1, **caractérisé en ce que** l'orifice d'admission d'air est aménagé pour un écoulement d'air d'admission, dont la composante horizontale à l'extérieur de l'orifice d'admission d'air représente au moins 50 % du courant d'air d'admission.

3. Dispositif de purification d'air selon la revendication 1 ou 2, **caractérisé en ce que** l'orifice d'admission d'air présente un angle compris entre environ 45° et 90° par rapport au plateau (16).

4. Dispositif de purification d'air selon l'une quelconque ou plusieurs des revendications 1 à 3, **caractérisé en ce que** l'orifice d'admission d'air est identique à une surface d'air latérale de cône ou à une surface de pyramide.

5. Dispositif de purification d'air selon l'une quelconque ou plusieurs des revendications 1 à 4, **caractérisé en ce que** le dispositif de purification d'air (10) déborde du plateau (16) d'une distance inférieure à environ 35 à 45 cm.

6. Dispositif de purification d'air selon l'une quelconque ou plusieurs des revendications 1 à 5, **caractérisé en ce que** le meuble ressemblant à une table présente un revêtement (filtre 50, plateau de recouvrement 52) pour l'orifice d'admission d'air, qui empêche ou tout du moins empêche largement un versement de liquide ou une évacuation d'objet dans le dispositif de purification d'air (10).

7. Dispositif de purification d'air selon la revendication 6, **caractérisé en ce que** le revêtement (filtre 50, plaque de recouvrement 52) présente un déflecteur (52) disposé au-dessus de l'orifice d'admission d'air.

8. Dispositif de purification d'air selon la revendication 6, **caractérisé en ce que** le revêtement (filtre 50, plaque de recouvrement 52) présente un filtre (50) mécanique, en particulier un tamis filtrant, qui recouvre l'orifice d'admission d'air.

9. Dispositif de purification d'air selon la revendication 6, **caractérisé en ce que** le revêtement (filtre 50, plaque de recouvrement 52) peut être enlevé ou ouvert.

10. Dispositif de purification d'air selon l'une quelconque ou plusieurs des revendications précédentes, **caractérisé en ce que** le meuble ressemblant à une table présente un bord (46) débordant du plateau (16) vers le haut, périphérique, imperméable à l'air et aux liquides au-dessous de l'orifice d'admission d'air.

11. Dispositif de purification d'air selon la revendication 10, **caractérisé en ce que** le bord (46) est conçu comme un support d'écriture et/ou support d'image.

12. Dispositif de purification d'air selon l'une quelconque ou plusieurs des revendications précédentes, **caractérisé en ce que** le meuble ressemblant à une table présente un éclairage (54), qui éclaire la zone de l'orifice d'admission d'air.

13. Dispositif de purification d'air selon la revendication 2, **caractérisé en ce que** l'éclairage (54) est sans éblouissement.

14. Dispositif de purification d'air selon l'une quelconque ou plusieurs des revendications précédentes, **caractérisé en ce que** le meuble ressemblant à une table présente un pied de table (12) de forme tubulaire, dans lequel le dispositif de purification d'air (10) est logé.

15. Dispositif de purification d'air selon l'une quelconque ou plusieurs des revendications 1 à 14, **caractérisé en ce que** l'ensemble de séparation (22) électrostatique présente un séparateur à tubes (24) imbriqué de façon simple ou multiple.

16. Dispositif de purification d'air selon l'une quelconque ou plusieurs des revendications précédentes, **caractérisé en ce que** le dispositif de purification d'air (10) présente une commande facultative (32).

17. Dispositif de purification d'air selon l'une quelconque ou plusieurs des revendications précédentes, **caractérisé en ce que** le dispositif de purification d'air (10) présente un détecteur de fumée.

18. Dispositif de purification d'air selon l'une quelconque ou plusieurs des revendications précédentes, **caractérisé en ce que** le dispositif de purification d'air (10) présente un appareil (58) pour la distribution de parfums.
